# EUROPÄISCHE PATENTSCHRIFT

(11) **EP 2 981 756 B1**
(45) Veröffentlichungstag und Bekanntmachung des Hinweises auf die Patenterteilung: **01.12.2021**
(21) Anmeldenummer: 14714295.4
(22) Anmeldetag: 02.04.2014
(51) Int. Cl.: F17C 3/08

(54) **BEHÄLTER MIT EINEM AUSSENBEHÄLTER UND EINEM INNENBEHÄLTER UND AUFHÄNGEVORRICHTUNG**
CONTAINER WITH AN OUTER CONTAINER AND AN INNER CONTAINER AND SUSPENSION SYSTEM
RÉSERVOIR AVEC UN RÉSERVOIR EXTÉRIEUR ET UN RÉSERVOIR INTÉRIEUR ET DISPOSITIF DE SUSPENSION

(30) Priorität: 05.04.2013 EP 13162456
(43) Veröffentlichungstag der Anmeldung: 10.02.2016
(73) Patentinhaber: Cryoshelter GmbH, 8020 Graz (AT)
(72) Erfinder: REBERNIK, Matthias, A-8020 Graz (AT)
(74) Vertreter: Schwarz & Partner Patentanwälte GmbH
(86) Internationale Anmeldenummer: PCT/EP2014/056618
(87) Internationale Veröffentlichungsnummer: WO 2014/161898

(56) Entgegenhaltungen:
- DD-A7- 281 318
- DD-A7- 281 319
- DE-A1- 10 345 958
- US-A- 3 115 983
- None

## Beschreibung

Die Erfindung betrifft eine Anordnung eines Außenbehälters und eines im Außenbehälter thermisch isoliert angeordneten Innenbehälters.

Aus dem Dokument EP 0 014 250 A1 ist eine Aufhängevorrichtung für einen Tieftemperaturtank bekannt, mit der der Tieftemperaturtank thermisch isoliert in einem Außenbehälter aufgehängt ist. Die Aufhängevorrichtung weist mehrere Befestigungsbänder auf, die jeweils aus mehreren hintereinandergeschalteten Einzelelementen unterschiedlichen Fasermaterials zusammengesetzt sind und das tanknächste Einzelelement jedes Befestigungsbandes aus dem Fasermaterial mit dem vergleichsweise niedrigsten Wärmeausdehnungskoeffizienten besteht. Die Befestigungsbänder können nur Zugkräfte, aber keine Druckkräfte aufnehmen. Es ist deshalb notwendig, die Befestigungsbänder zu zwei an entgegengesetzten Endbereichen des Tieftemperaturtanks angreifenden Festlagern zu gruppieren, wobei die Zugkräfte der beiden Festlager in entgegengesetzten Richtungen wirken. Erst aus der Summe aller Befestigungselemente entsteht ein Festlager. Voraussetzung dazu ist eine geometrische Anordnung der Befestigungselemente, die die thermischen Längenänderungen der jeweiligen Behälter und der Befestigungsbänder selbst möglichst weitgehend ausgleicht, da sonst die thermischen Spannungen die Vorrichtung bis zur zulässigen Belastungsgrenze belasten.

Aus der DE 196 25 492 C1 ist ein toroidförmiger, mit Flüssighelium gefüllter Cryogentank bekannt, der über eine Aufhängevorrichtung koaxial in einem zylindrischen Außenbehälter an Bord eines Forschungssatelliten aufgehängt ist. Die Aufhängevorrichtung besteht aus einem oberen und einem unteren, jeweils fachwerkartig aus Zug- und Druckstäben zusammengesetzten Rechteckrahmen, und unter Vorspannung zwischen den jeweiligen Eckpunkten der Rechteckrahmen und dem Außenbehälter schräg verlaufenden Zugbändern. Der Cryogentank ist somit nur über die Zugbänder mit dem Außenbehälter verbunden. Die Zugbänder können nur Zugkräfte, aber keine Druckkräfte aufnehmen.

Aus dem Dokument US 3,115,983 ist ein Aufhängesystem für einen mehrwandigen kryogenen, kugelförmigen Flüssigkeitsspeichertank bekannt. Der Außenbehälter ruht auf Säulen auf, die sich von einem Fundament vertikal nach oben erstrecken. Der Außenbehälter ist mit dem Innenbehälter mittels einer Vielzahl von schlaufenförmigen Zugelementen 15 verbunden. Die Zugelemente sind um den Innendurchmesser des Außenbehälters herum verteilt und erstrecken sich im Zwischenraum zwischen Außenbehälter und Innenbehälter. Die Zugelemente sind einerseits mit ihren beiden Enden an paarweisen Basis-Stützelementen 14 an der Innenseite des Außenbehälters befestigt und umschlingen andererseits gekrümmte Seitenkanten von Auflageplatten 17, die an der Außenwand des Innenbehälters befestigt sind. Durch die Umschlingung ruhen aufgrund der Schwerkraft die Auflageplatten in den Zugelementen auf. Um zu verhindern, dass die Zugelemente von den gekrümmten Seitenkanten der Auflageplatten 17 herunterrutschen, sind Rückhaltelaschen 18 vorgesehen, die die Zugelemente aber nicht festklemmen. Da auf den Innenbehälter nur die Schwerkraft wirkt, sind die Zugelemente nur auf Zug belastet und können deshalb als Seile, Kabel oder Ketten ausgebildet sein. Es ist auch erwähnt, dass die Zugelemente als passend geformte starre Stäbe ausgebildet werden können, doch auch bei einer solchen Ausführungsform nehmen die Zugelemente keine Druckkräfte auf, da sich bei einer nach oben auf den Innenbehälter wirkenden Kraft die Auflageplatten von den Zugelementen abheben würden. Bei seitlichen Kräften auf den Innenbehälter würden die stabförmigen Zugelemente entlang der halbkreisförmigen Kanten der Auflageplatten verrutschen. Wie in dem Dokument erwähnt ist, sind solche Bewegungen zum Ausgleich von thermischen Spannungen erwünscht. Die Lagerung des Innenbehälters am Außenbehälter stellt somit, mechanisch gesehen, ein Loslager dar.

Wie allgemein bekannt, wird in der Mechanik zwischen Loslagern und Festlagern unterschieden. Ein Festlager überträgt in alle Richtungen im Raum wirkende Kräfte. Bei einem Loslager ist in einer oder zwei der drei Richtungen im Raum keine Verbindung vorhanden und somit keine Kraftübertragung in diese Richtung möglich. Ein Loslager lässt somit die Bewegung des gelagerten Körpers in zumindest eine Raumrichtung zu.

Das Dokument DE 103 45 958 A1 offenbart einen für den Einbau in Kraftfahrzeuge bestimmten Tank für kryogene Flüssigkeiten, bestehend aus einem Außenbehälter und einem darin in Zug- oder Druckstreben aufgehängten Innenbehälter. Die räumlich angeordneten Zug- oder Druckstreben gleichen Verlagerungen des Innenbehälters durch Wärmedehnungsdifferenzen aus. Um den gegensätzlichen Anforderungen in Kraftfahrzeugen optimal Rechnung zu tragen, sind zwischen Außenbehälter und Innenbehälter zusätzlich Anschläge und Stützflächen vorgesehen, die bei stillstehendem Fahrzeug auf Abstand und bei fahrendem Fahrzeug zur Anlage bringbar sind. Die Anschläge im Inneren des Außenbehälters wirken mit Stützflächen am Innenbehälter zusammen und sind mittels eines Aktuators verschiebbar. Bei stillstehendem Fahrzeug liegen die Anschläge nicht an den Stützflächen an. Der Innenbehälter ist dann nur mittels der Zug- oder Druckstreben mit dem Außenbehälter verbunden, was als ausreichend erachtet wird, da im Stillstand des Kraftfahrzeuges normalerweise keinerlei Erschütterungen auftreten. Die Zug- oder Druckstreben können somit sehr leicht und mit sehr kleinem Querschnitt ausgebildet sein, sodass sie nur minimale Wärmebrücken bilden. Für den Fahrbetrieb des Fahrzeugs wird der Anschlag in Anlage an der Stützfläche geschaltet. Nun ist der Innenbehälter spielfrei und fest mit dem Außenbehälter verbunden, der Innenbehälter ist somit im Außenbehälter festgelegt und die Zug- oder Druckstreben sind nicht belastet. Ein Festlager des Innenbehälters am Außenbehälter wird somit nur dann gebildet, wenn der Anschlag in Anlage an der Stützfläche geschaltet ist. Die Streben nehmen entweder Zugkräfte oder Druckkräfte auf und sind aufgrund ihres kleinen Querschnitts nicht geeignet, den Innentank im Fahrbetrieb zu lagern.

Das Dokument DD 281 319 A7 offenbart ein Lager für doppelwandige Behälter kryogener Medien und ist gleichermaßen für Standtanks und Transportbehälter des Straßen- und Schienentransportes einsetzbar. Das Lager ist aus mindestens drei Ringen oder Ringsegmenten aufgebaut, deren Enden mäanderförmig miteinander verbunden sind. Je nach dem, ob ein asymmetrischer oder symmetrischer Aufbau des Mäanders gewählt wurde, ist ein Ring. bzw. sind seine äußeren Ringe am Außenbehälter befestigt und ein Ring bzw. sein Zentralring steht lose mit dem Innenbehälter in Verbindung. Dieses Lager gestattet die Übertragung großer radialer Kräfte, nimmt aber keine nennenswerten axialen Kräfte auf. Es handelt sich somit um ein Loslager mit axialer Freigängigkeit, um thermische Längenänderungen des Innenbehälters zu kompensieren. Zwei derartige Loslager halten den Innenbehälter damit in radialer Richtung. Zur axialen Sicherung muss eines der beiden Loslager durch eine zusätzliche Maßnahme axial gestützt werden, wofür die Einbindung eines Konus vorgeschlagen wird. Erst durch Kombination der radialen Lagerung mit der axialen Abstützung entsteht ein Festlager.

Das Dokument DD 281 318 A7 offenbart ein Lager für doppelwandige Behälter kryogener Medien und ist gleichermaßen für Standtanks und Transportbehälter des Straßen- und Schienentransportes einsetzbar. Das Lager ist als mäanderförmiges Hohlprofil gestaltet, das in seiner Längsachse einen Zentralflansch trägt, welcher mit dem Innenbehälter in Verbindung steht, während das äußere Ende des Hohlprofils andererseits am Außenbehälter gehaltert ist. Ein einzelnes Lagerelement - bestehend aus mäanderförmigem Hohlprofil mit einem Zentralflansch - stellt ein Loslager dar. Da es zur Vermeidung thermischer Spannungen nicht fix mit dem Innenbehälter verbunden wird, stellt es genau gesagt ein nur auf Druck belastbares Loslager dar. Ein Festlager im technischen Sinn wird erst durch mehrere in unterschiedlichen Raumrichtungen zueinander versetzte Lager erzielt. Die Lager sind in einem als Ringspalt bezeichneten ringförmigen Bauraum zwischen dem Innenbehälter und dem Außenbehälter angeordnet.

Es besteht nach wie vor das Bedürfnis an einer hochstabilen und steifen Aufhängevorrichtung für einen in einem Außenbehälter thermisch isoliert angeordneten Innenbehälter. Auch wenn hohe dynamische Kräfte auf den Außenbehälter und den Innenbehälter sowie die Aufhängevorrichtung wirken, wie sie z.B. bei Verwendung in Fahrzeugen oder bei Stößen auftreten, müssen die Stabilität und Steifigkeit der Aufhängevorrichtung gewahrt und Kräfte verteilt ohne hohe lokale Kraftspitzen in die Behälter eingeleitet werden. Es ist insbesondere eine Aufgabe der Erfindung eine Aufhängevorrichtung zu entwickeln, mit der thermisch isolierte Anordnung eines Innenbehälters in einem Außenbehälter realisierbar ist, die hochsteif und sehr tragfähig ist, ohne oder mit vergleichsweise geringen spezifischen Versteifungsmaßnahmen an den Behältern . Es ist auch eine Aufgabe der Erfindung eine Aufhängevorrichtung und eine damit versehene Behälteranordnung zu schaffen, die billig zu fertigen und einfach zu montieren sind.

Die vorliegende Erfindung löst diese Aufgabe durch Bereitstellen einer Behälteranordnung eines Außenbehälters und eines im Außenbehälter thermisch isoliert angeordneten Innenbehälters gemäss Anspruch 1.

Die thermische Isolation zwischen Innenbehälter und Außenbehälter erfolgt bevorzugt durch Evakuierung des Zwischenraums. Durch die erfindungsgemäße Aufhängevorrichtung werden Kräfte in Bereiche hoher Steifigkeit der Behälter eingeleitet. Die Angriffspunkte der Festlager-Befestigungselemente am Innenbehälter liegen radial näher zum Umfang des Innenbehälters als zur Längsachse des Innenbehälters. Die Angriffspunkte der Festlager-Befestigungselemente am Außenbehälter liegen radial näher zum Umfang des Außenbehälters als zur Längsachse des Außenbehälters. Bevorzugt liegen die Angriffspunkte der Festlager-Befestigungselemente am Außenbehälter an der Umfangswand des Außenbehälters.

Die Funktion eines Festlagers wird gemäß der Erfindung durch die Anbringung der stabförmigen Festlager-Befestigungselemente im ringförmigen Bauraum mit zueinander in unterschiedlichen Raumrichtungen versetzten Hauptrichtungsachsen erreicht. Die Festlager-Befestigungselemente sind sowohl am Innenbehälter wie auch am Außenbehälter bzw. am Loslagerring fest, d.h. auf Zug und Druck belastbar, verbunden. Die Festlagerfunktion entsteht aus der Summenwirkung der Kraftübertragung der einzelnen Festlager-Befestigungselemente. Auch bei den nachfolgend beschriebenen Loslagern sind die Loslager -Befestigungselemente sowohl am Innenbehälter oder am Außenbehälter als auch am Loslagerring fest, d.h. auf Zug und Druck belastbar, verbunden.

Unter dem Begriff "radial" versteht der Fachmann "in die Richtung eines Radius verlaufend" bzw. bei geometrischen Formen, die keinen Radius aufweisen, "von einem Mittelpunkt strahlenförmig ausgehend oder auf ihn hinzielend". Als Mittelpunkt kann in einer Querschnittsansicht eines geometrischen Körpers mit einer Achse die in der Querschnittsansicht als Punkt dargestellte, normal aus der Zeichenebene tretende Achse angesehen werden. In dieser Schrift wird der Begriff "radial" im Sinne von "in einer Normalebene zur Längsachse entlang der Hauptabmessung der Behälter" verstanden und ist zur Verdeutlichung auch in etlichen der beiliegenden Zeichnungen so dargestellt.

Unter dem Begriff "axial" versteht der Fachmann "in der Achse" bzw. "längs der Achse". Unter dem Begriff "Längsachse" wird eine Achse entlang der Hauptabmessung (= größte Erstreckung) eines Körpers verstanden.

Die Festlager-Befestigungselemente sind steife, stabförmige Elemente. Bevorzugt bestehen die Festlager-Befestigungselemente im Wesentlichen aus Faserverbundwerkstoffen, vorzugsweise mit Aramidfasern, Kohlefasern, Glasfasern, Basaltfasern oder Kombinationen daraus, besonders bevorzugt mit Aramidfasern, die abschnittsweise mit Glasfasern gemischt sind, weil diese Materialien die erforderliche Steifigkeit aufweisen.

Der Begriff "ein einzelnes Festlager" ist so zu verstehen, dass das Festlager mit seinen Befestigungselementen nur an einem Abschnitt des Innenbehälters angreift, wobei dieser Abschnitt quer zu einer Längsachse des Innenbehälters ringförmig um eine Umfangswand des Innenbehälters oder an einer Stirnwand des Innenbehälters im Abstand von dessen Längsachse verläuft. Es ist kein weiteres Festlager vorgesehen, sondern entweder wird der Innenbehälter frei kragend nur durch dieses eine Festlager gehalten, oder es ist zusätzlich ein Loslager vorgesehen, das in einem Abstand vom Festlager am Innenbehälter angreift.

Um die Größe der Behälteranordnung möglichst gering zu halten, sind vorzugsweise der Außenbehälter und der Innenbehälter mit koaxialen Behälterlängsachsen angeordnet.

Die Festlager-Befestigungselemente sind in einem zwischen Innenbehälter und Außenbehälter definierten ringförmigen Bauraum angeordnet, der sich vorzugsweise um den Umfang des Innenbehälters herum erstreckt, aber auch teilweise entlang eines von der Längsachse des Innenbehälters beabstandeten Abschnitts einer stirnseitigen Wand verlaufen kann. Der ringförmige Bauraum kann geometrisch auch als Hohlprofil angesehen werden.

Bei der erfindungsgemäßen Aufhängevorrichtung stehen die Festlager-Befestigungselemente schräg auf die Längsachse des Innenbehälters. Insbesondere stehen die Festlager-Befestigungselemente nicht parallel zur und nicht normal auf die Längsachse des Innenbehälters. Dadurch werden die von den Befestigungselementen in die Wände des Innenbehälters und des Außenbehälters eingeleiteten Kräfte unabhängig von der Angriffsrichtung dynamischer Kräfte sehr gleichmäßig verteilt und die Auslenkung des Innenbehälters gering gehalten. Diese Wirkungen werden besonders gut erzielt, wenn die Festlager-Befestigungselemente jeweils paarweise an einer die Innenbehälter-Längsachse enthaltenden Ebene gespiegelt sind. Bei einer Ausführungsform der erfindungsgemäßen Aufhängevorrichtung, die besonders hohen Verdrehwiderstand bietet, schneiden die Festlager-Befestigungselemente die Längsachse des Innenbehälters nicht, oder in anderen Worten sind die Festlager-Befestigungselemente windschief zur Längsachse des Innenbehälters angeordnet.

Eine Optimierung der gleichmäßigen Verteilung der von den Befestigungselementen in die Wände des Innenbehälters und des Außenbehälters eingeleiteten Kräfte wird erreicht, wenn die Angriffspunkte der Festlager-Befestigungselemente am Innenbehälter in einer Normalebene zur Längsachse des Innenbehälters liegen und/oder wenn die Angriffspunkte der Festlager-Befestigungselemente am Außenbehälter in einer Normalebene zur Längsachse des Außenbehälters liegen.

Für eine besonders kurze Behälteranordnung ist es zweckmäßig, wenn die Angriffspunkte der Festlager-Befestigungselemente am Innenbehälter vom Zentrum des Innenbehälters axial weiter entfernt sind als die Angriffspunkte der Befestigungselemente am Außenbehälter.

Der geringste radiale Isolationsspalt der Aufhängevorrichtung wird erreicht, wenn die Angriffspunkte der Festlager- Befestigungselemente am Innenbehälter axial näher am Zentrum des Innenbehälters liegen als die Angriffspunkte der Festlager-Befestigungselemente am Außenbehälter.

Eine Ausführungsform der Aufhängevorrichtung umfasst ein im Außenbehälter angeordnetes, den Innenbehälter stützendes Loslager, das mit einem Loslagerring ausgebildet ist, wobei auf Zug und Druck beanspruchbare, stabförmige Loslager-Befestigungselemente ringförmig verteilt einerseits am Loslagerring und andererseits am Innenbehälter oder am Außenbehälter angreifen, wobei die Loslager-Befestigungselemente in einem ringförmigen Bauraum angeordnet sind, der sich vorzugsweise um den Umfang des Innenbehälters herum erstreckt, wobei vorzugsweise der Loslagerring mittels Zugfedern oder Druckfedern vorgespannt ist. Wenn die Loslager-Befestigungselemente am Loslagerring und am Innenbehälter angreifen, so ist der Loslagerring verschiebbar im Außenbehälter angeordnet. Wenn die Loslager-Befestigungselemente am Loslagerring und am Außenbehälter angreifen, so ist der Innenbehälter verschiebbar im Loslagerring angeordnet.

Bevorzugt stehen die Loslager-Befestigungselemente schräg auf die Längsachse des Innenbehälters. Insbesondere stehen die Loslager-Befestigungselemente nicht parallel zur und nicht normal auf die Längsachse des Innenbehälters. Bei dieser Ausführungsform werden die von den Befestigungselementen in die Wände des Innenbehälters bzw. Außenbehälters eingeleiteten Kräfte unabhängig von der Angriffsrichtung dynamischer Kräfte gut verteilt. Eine besonders gleichmäßige Verteilung dynamischer Kräfte wird erreicht, wenn die Loslager-Befestigungselemente jeweils paarweise an einer die Innenbehälter-Längsachse enthaltenden Ebene gespiegelt sind. Bei einer Ausführungsform der Aufhängevorrichtung, die besonders hohen Verdrehwiderstand bietet, schneiden die Loslager-Befestigungselemente die Längsachse des Innenbehälters nicht, oder in anderen Worten sind die Loslager-Befestigungselemente windschief zur Längsachse des Innenbehälters angeordnet.

Für eine besonders kurze Behälteranordnung ist es zweckmäßig, wenn die Angriffspunkte der Loslager-Befestigungselemente am Innenbehälter vom Zentrum des Innenbehälters axial weiter entfernt sind als die Angriffspunkte der Loslager-Befestigungselemente am Loslagerring. In einer alternativen Ausführungsform sind die Angriffspunkte der Loslager-Befestigungselemente am Außenbehälter vom Zentrum des Innenbehälters axial weiter entfernt als die Angriffspunkte der Loslager-Befestigungselemente am Loslagerring.

Ein geringer Isolationsspalt wird erzielt, wenn die Angriffspunkte der Loslager-Befestigungselemente am Innenbehälter näher zum Zentrum des Innenbehälters liegen als die Angriffspunkte der Befestigungselemente am Loslagerring. In einer alternativen Ausführungsform liegen die Angriffspunkte der Loslager-Befestigungselemente am Außenbehälter näher am Zentrum des Innenbehälters als die Angriffspunkte der Befestigungselemente am Loslagerring.

Die Loslager-Befestigungselemente sollen aus einem möglichst steifen Material bestehen. Bevorzugt sind Faserverbundwerkstoffe, vorzugsweise mit Aramidfasern, Kohlefasern, Glasfasern, Basaltfasern oder Kombinationen daraus, besonders bevorzugt mit Aramidfasern, die abschnittsweise mit Glasfasern gemischt sind.

Für eine optimale thermische Isolierung ist zwischen Außenbehälter und Innenbehälter zumindest ein Strahlungsschild angeordnet. Damit eine möglichst geringe thermische Leitung zwischen dem Strahlungsschild und dem Innenbehälter besteht, ist vorgesehen, dass zumindest ein Strahlungsschild direkt an Befestigungselementen der Aufhängevorrichtung montiert ist. An zumindest einem dieser Strahlungsschilde können auch weitere Strahlungsschilde montiert sein.

Die Erfindung wird nun anhand von Ausführungsbeispielen unter Bezugnahme auf die Zeichnungen näher erläutert.
Fig. 1 zeigt eine erfindungsgemäße Behälteranordnung schematisch in Längsansicht.
Fig. 2 zeigt einen geometrischen ringförmigen Bauraum, in dem die Befestigungselemente der erfindungsgemäßen Aufhängevorrichtung angeordnet sind.
Figuren 3 bis 5 zeigen Variationen für die Positionierung der Festlager-Befestigungselemente innerhalb des ringförmigen Bauraums.
Fig. 6 zeigt eine nicht erfindungsgemässe Ausführungsform einer Behälteranordnung schematisch in Längsansicht.
Fig. 7 zeigt eine nicht erfindungsgemässe Ausführungsform einer Behälteranordnung schematisch in Längsansicht.
Fig. 9A und Fig. 9B zeigen eine nicht erfindungsgemässe Ausführungsform eines Loslagers einer Aufhängevorrichtung.
Fig. 10A und Fig. 10B zeigen ein Festlager der erfindungsgemäßen Aufhängevorrichtung in Vorderansicht und in isometrischer Ansicht.
Fig. 11A und Fig. 11B zeigen ein weitere Ausführungsform eines Festlagers der erfindungsgemäßen Aufhängevorrichtung in Vorderansicht und in isometrischer Ansicht.
Fig. 12 zeigt eine nicht erfindungsgemässe Ausführungsform einer Behälteranordnung schematisch in Längsansicht.
Fig. 13 zeigt eine nicht erfindungsgemässe Ausführungsform einer Behälteranordnung schematisch in Längsansicht.

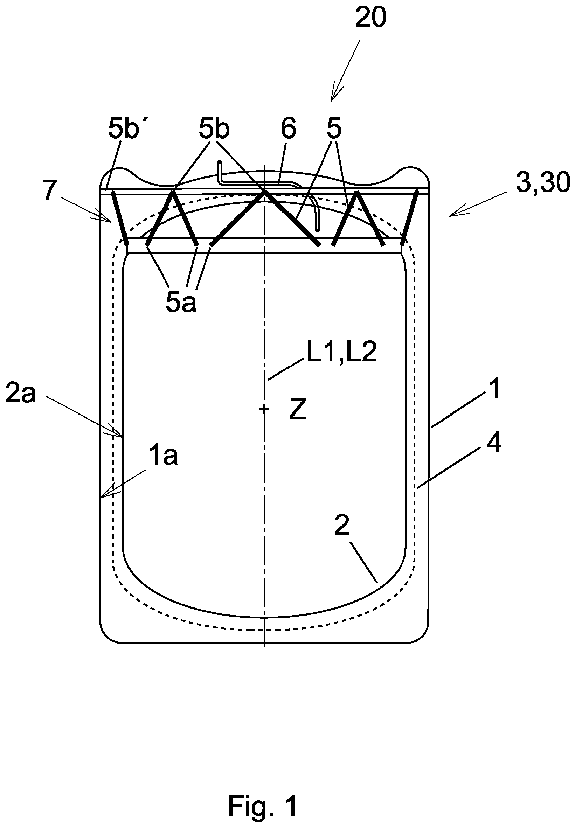

Fig. 1 zeigt eine Behälteranordnung 20, die einen Außenbehälter 1 und einen im Außenbehälter 1 thermisch isoliert angeordneten Innenbehälter 2 zur Aufnahme kryogener Medien und/oder Vorrichtungen umfasst, die durch eine allgemein mit 3 bezeichnete Aufhängevorrichtung miteinander verbunden sind. Die thermische Isolierung des Innenbehälters 2 vom Außenbehälter 1 erfolgt durch Evakuierung des Zwischenraums zwischen den beiden Behältern. Der Außenbehälter 1 weist eine zentrale Längsachse L1 auf; der Innenbehälter 2 weist eine zentrale Längsachse L2 auf, auf der der Zentrumspunkt Z des Innenbehälters 2 liegt. Die beiden Längsachsen L1, L2 sind koaxial angeordnet. Die Befüllung des Innenbehälters erfolgt durch zumindest eine Leitung 6. Zwischen dem Außenbehälter 1 und dem Innenbehälter 2 ist ein Strahlungsschild 4 angeordnet, das direkt an Festlager-Befestigungselementen 5 montiert ist. Optional können weitere Strahlungsschilde vorgesehen werden, die einander umgeben, wobei die weiteren Strahlungsschilde entweder an einem benachbarten Strahlungsschild oder ebenfalls an den Festlager-Befestigungselementen 5 montiert werden können.

Die Aufhängevorrichtung 3 der Behälteranordnung 20 besteht aus einem einzigen Festlager 30, das einerseits am Außenbehälter 1 und andererseits am Innenbehälter 2 angreifende, auf Zug und Druck beanspruchbare, stabförmige Festlager-Befestigungselemente 5 umfasst, wobei die Festlager-Befestigungselemente 5 ringförmig am Umfangsbereich des Innenbehälters 2 verteilt direkt oder indirekt (z.B. über einen Anbindungsring) an der Außenwand 2a des Innenbehälters 2 angreifen. Auch in den nachfolgend beschriebenen und in den Zeichnungen gezeigten weiteren Ausführungsformen sind die Festlager-Befestigungselemente 5 stabförmig ausgebildet. Die Angriffspunkte 5a der Festlager-Befestigungselemente 5 an der Außenwand 2a liegen ringförmig verteilt in einer Ebene, die orthogonal auf die Längsachse L2 des Innenbehälters 2 steht. Die Festlager-Befestigungselemente 5 greifen mit weiteren Angriffspunkten 5b entweder direkt oder - wie in Fig. 1 gezeigt - indirekt über einen Anbindungsring 5b' am Umfangsbereich der Innenwand 1a des Außenbehälters 1 an.

Die Festlager-Befestigungselemente 5 sind steife Elemente aus Faserverbundwerkstoffen, vorzugsweise mit Aramidfasern, Kohlefasern, Glasfasern, Basaltfasern oder Kombinationen daraus, besonders bevorzugt mit Aramidfasern, die abschnittsweise mit Glasfasern gemischt sind. Die Festlager-Befestigungselemente 5 sind am Außenbehälter 1 und am Innenbehälter 2 durch Schrauben, Nieten, Bolzen, die den Vorteil der Drehbarkeit aufweisen, Kleben, Klemmen, Einhängen, etc. fixiert.

Da nur ein einzelnes Festlager 30 vorgesehen ist, hängt der Innenbehälter 2 frei kragend im Außenbehälter 1. Da die Festlager-Befestigungselemente 5 am Außenumfang des Innenbehälters 2 und am Innenumfang des Außenbehälters 1 angreifen, können sehr hohe Kräfte abgestützt werden. Somit können im Vergleich zum Stand der Technik größere Innenbehälter 2 ohne Loslager ausgeführt werden. Der Freiraum zwischen Innenbehälter 2 und Außenbehälter 1 ist evakuiert. Da die Leitung 6 durch dieses Vakuum geführt ist, wird zusätzlich die thermische Isolationsfähigkeit der Behälteranordnung 20 verbessert.

Die Festlager-Befestigungselemente 5 stehen schräg auf die Längsachse L2 des Innenbehälters 2 und sind jeweils paarweise an einer die Innenbehälter-Längsachse L2 enthaltenden Ebene gespiegelt. Die Angriffspunkte 5a der Festlager-Befestigungselemente 5 am Innenbehälter 2 liegen axial näher zum Zentrum Z des Innenbehälters 2 als die Angriffspunkte 5b der Festlager-Befestigungselemente 5 am Außenbehälter 1.

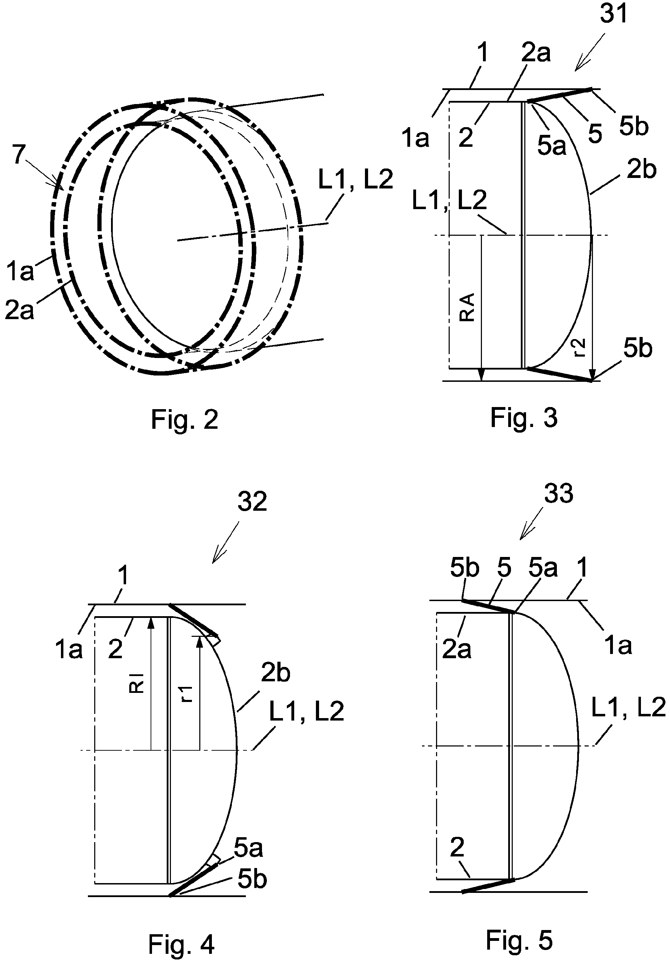

In geometrischer Hinsicht sind die Festlager-Befestigungselemente 5 in einem zwischen der Außenwand 2a des Innenbehälters 2 und der Innenwand 1a des Außenbehälters 1 definierten ringförmigen Bauraum 7 angeordnet, wie insbesondere in Fig. 2 dargestellt ist.

Die Figuren 3 bis 5 zeigen ausschnittsweise geometrische Variationsmöglichkeiten für die Positionierung der Festlager-Befestigungselemente 5 innerhalb des ringförmigen Bauraums des Festlagers.

Fig. 3 zeigt ein Festlager 31, bei dem die Angriffspunkte 5a der Festlager-Befestigungselemente 5 am Innenbehälter 2 an einem Umfangskreis liegen, der im Bereich des Übergangs von der Umfangswand 2a zur Stirnwand 2b definiert ist. Die Angriffspunkte 5b der Festlager-Befestigungselemente 5 liegen an einem Umfangskreis an der Innenwand 1a des Außenbehälters 1 und sind vom Zentrum des Innenbehälters axial weiter entfernt als die Angriffspunkte 5a am Innenbehälter 2. Allgemein formuliert, liegen die Angriffspunkte 5b radial (Pfeil r2) näher zum Umfang (Pfeil RA) des Außenbehälters 1 als zu dessen Längsachse L1, wobei im gezeigten Spezialfall die Länge der Pfeile RA und r2 gleich groß ist, da die Angriffspunkte 5b direkt am Umfang der Innenwand 1a des Außenbehälters 1 liegen.

Fig. 4 zeigt ein Festlager 32, bei dem die Angriffspunkte 5a der Festlager-Befestigungselemente 5 am Innenbehälter 2 an einem an der Stirnwand 2b definierten Kreis liegen. Zu beachten ist, dass die Angriffspunkte 5a radial (Pfeil r1) näher zum Umfang (Pfeil RI) des Innenbehälters 2 als zur Längsachse L2 des Innenbehälters liegen. Die Angriffspunkte 5b der Festlager-Befestigungselemente 5 liegen an einem Umfangskreis an der Innenwand 1a des Außenbehälters 1 und sind axial näher zum Zentrum des Innenbehälters 2 positioniert als die Angriffspunkte 5a am Innenbehälter 2.

Fig. 5 zeigt ein der Fig. 4 ähnelndes Festlager 33, bei dem die Angriffspunkte 5b der Festlager-Befestigungselemente 5 ebenfalls an einem Umfangskreis an der Innenwand 1a des Außenbehälters 1 liegen. Weiters sind die Angriffspunkte 5b am Außenbehälter 1 axial näher zum Zentrum des Innenbehälters 2 positioniert als die Angriffspunkte 5a am Innenbehälter 2. Im Unterschied zur Fig. 4 ist bei der Ausführungsform des Festlagers 33 gemäß Fig. 5 die Kreislinie, auf der die Angriffspunkte 5a am Innenbehälter 2 liegen, auf der Umfangs-Außenwand 2a definiert.

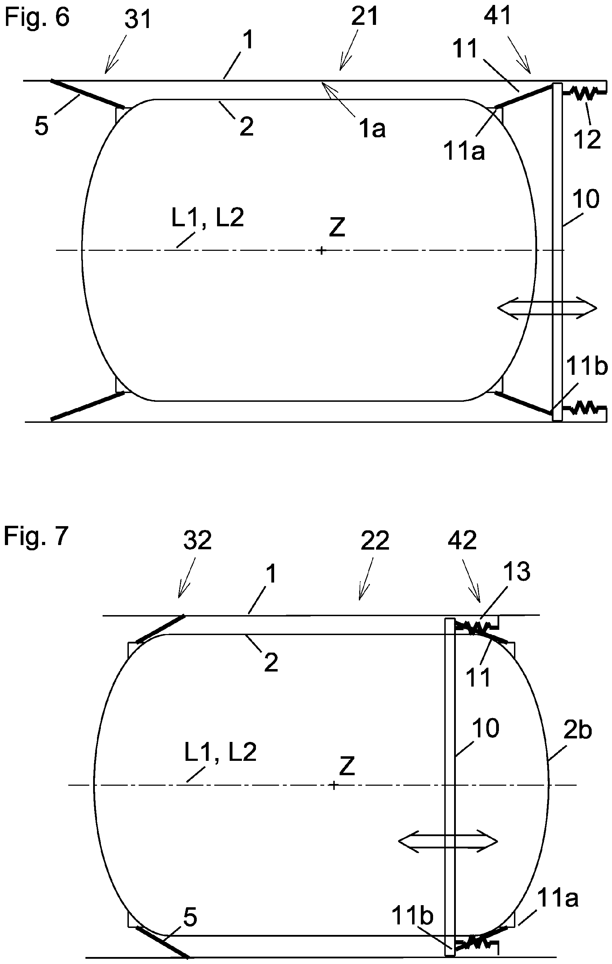

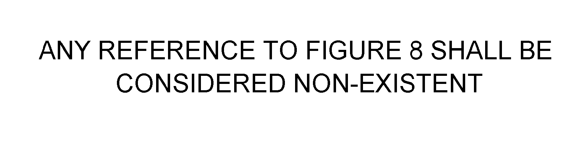

Fig. 6 zeigt eine Behälteranordnung 21 mit dem Außenbehälter 1 mit einer Längsachse L1 und dem im Außenbehälter 1 thermisch isoliert angeordneten Innenbehälter 2 mit einer Längsachse L2. Die beiden Behälter 1, 2 sind koaxial zueinander angeordnet und durch eine Aufhängevorrichtung miteinander verbunden, die das oben beschriebene Festlager 31 und zusätzlich ein Loslager 41 umfasst. Das Loslager 41 besitzt einen entlang der Innenwand 1a des Außenbehälters 1 axial verschiebbar (siehe Doppelpfeil) gelagerten Loslagerring 10 aus einem steifen Material, wie z.B. faserverstärktem Kunststoff oder Metall bzw. Metalllegierungen. Auf Zug und Druck beanspruchbare, stabförmige Loslager-Befestigungselemente 11 greifen ringförmig verteilt einerseits am Loslagerring 10 und andererseits am Innenbehälter 2 an. Der Loslagerring 10 ist mittels direkt oder indirekt am Außenbehälter 1 angreifenden Zugfedern 12 vorgespannt. Die Loslager-Befestigungselemente 11 sind geometrisch gesehen (analog zur Darstellung von Fig. 2) in einem ringförmigen Bauraum angeordnet, der sich im Wesentlichen um den Umfang des Innenbehälters 2 herum erstreckt. Die Loslager-Befestigungselemente 11 sind aus einem möglichst steifen Material gefertigt. Sehr gut eignen sich Faserverbundwerkstoffe, vorzugsweise mit Aramidfasern, Kohlefasern, Glasfasern, Basaltfasern oder Kombinationen daraus, besonders bevorzugt mit Aramidfasern, die abschnittsweise mit Glasfasern gemischt sind.

Die Loslager-Befestigungselemente 11 stehen schräg auf die Längsachse L2 des Innenbehälters 2 und sind jeweils paarweise an einer die Innenbehälter-Längsachse L2 enthaltenden Ebene gespiegelt. Die Angriffspunkte 11a der Loslager-Befestigungselemente 11 am Innenbehälter 2 liegen näher zum Zentrum Z des Innenbehälters 2 als die Angriffspunkte 11b der Befestigungselemente 11 am Loslagerring 10.

Fig. 7 zeigt eine Variante einer Behälteranordnung 22 mit dem Außenbehälter 1 und dem im Außenbehälter 1 thermisch isoliert angeordneten Innenbehälter 2. In dieser Variante umfasst die Aufhängevorrichtung, die die beiden Behälter 1, 2 miteinander verbindet, das oben anhand der Fig. 4 beschriebene Festlager 32 und zusätzlich eine Variante eines Loslagers 42, bei der - abweichend von der Fig. 6 - der Loslagerring 10 über dem Innenbehälter 2 angeordnet ist und durch direkt oder indirekt am Außenbehälter 1 angreifenden Druckfedern 13 vorgespannt wird. Die Loslager-Befestigungselemente 11 greifen ringförmig verteilt einerseits am Loslagerring 10 und andererseits nahe dem Umfang an der Stirnwand 2b des Innenbehälters 2 an. Die Loslager-Befestigungselemente 11 stehen schräg auf die Längsachse L2 des Innenbehälters 2. Die Angriffspunkte 11a der Loslager-Befestigungselemente 11 am Innenbehälter 2 sind axial gesehen weiter vom Zentrum Z des Innenbehälters 2 entfernt als die Angriffspunkte 11b der Befestigungselemente 11 am Loslagerring 10.

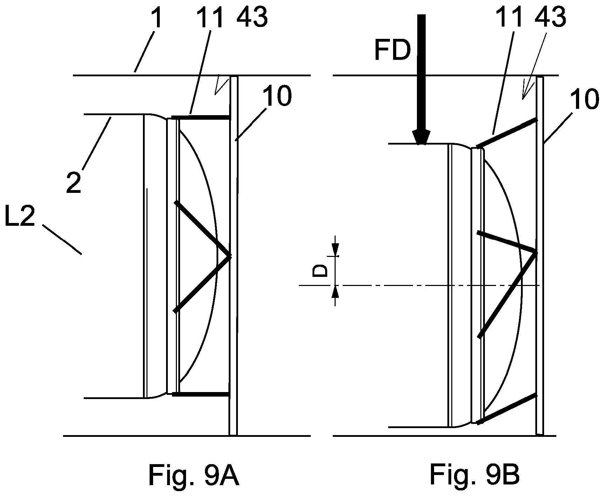

In Fig. 9A und Fig. 9B ist eine besonders vorteilhafte Ausführungsform eines Loslagers 43 dargestellt, bei der die Loslager-Befestigungselemente 11 in einem angenähert zylindrischen geometrischen Bauraum mit dem Innenbehälter 2 und dem Loslagerring 10 verbunden sind. Diese Ausführungsform bietet den großen Vorteil, dass bei dynamischer Belastung FD quer zur Längsachse L2 der Innenbehälter 2 zwar in Richtung der dynamischen Belastung ausgelenkt wird (Bezugszeichen D), die Auslenkung D aber durch den angenähert zylindrischen Bauraum praktisch zu keiner Schiefstellung des Loslagerrings 10 führt, wie in Fig. 9B zu sehen ist.

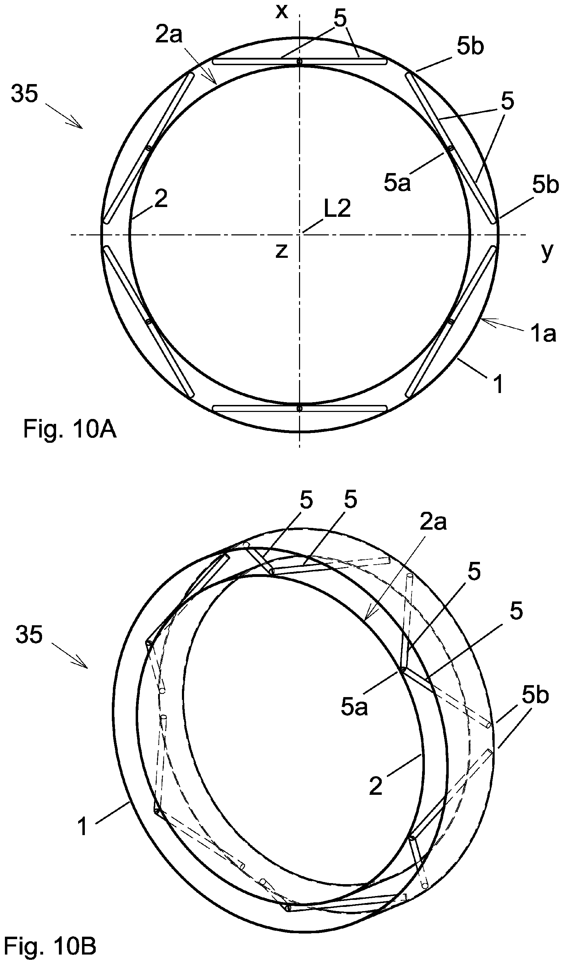

In den Figuren 10A und 10B ist ein der Fig. 1 entsprechendes Festlager 35 in Vorderansicht und in isometrischer Ansicht dargestellt. Die Angriffspunkte 5b der Festlager-Befestigungselemente 5 liegen ringförmig verteilt an einem Umfangskreis an der Innenwand 1a des Außenbehälters 1. Die Angriffspunkte 5a der Festlager-Befestigungselemente 5 liegen am Innenbehälter 2 an einem an der Außenwand 2a definierten Kreis. Die Festlager-Befestigungselemente 5 stehen schräg auf die das Zentrum Z enthaltende Längsachse L2 des Innenbehälters 2 und sind jeweils paarweise an einer die Innenbehälter-Längsachse L2 enthaltenden Ebene gespiegelt, siehe z.B. Ebene x.

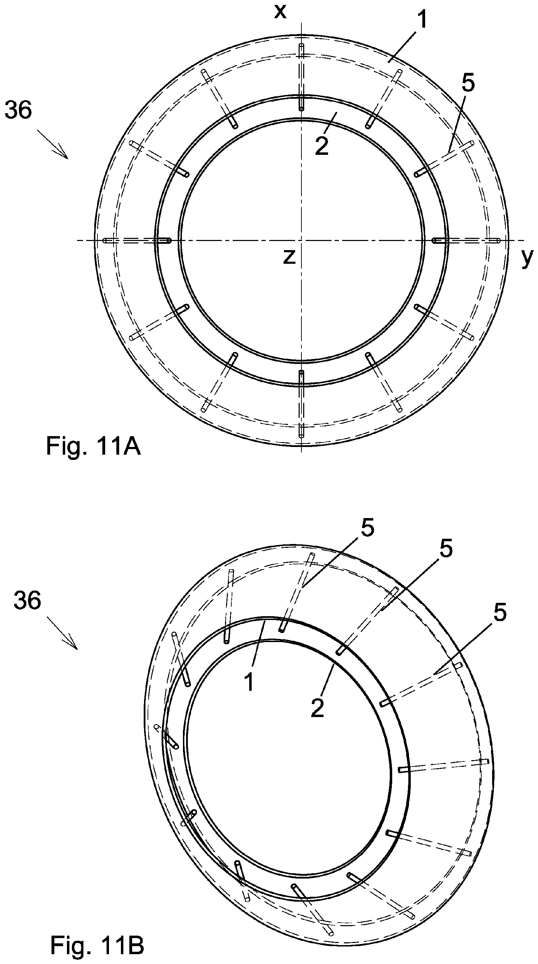

In den Figuren 11A und 11B ist ein Festlager 36 in Vorderansicht und in isometrischer Ansicht dargestellt. Die Festlager-Befestigungselemente 5 sind hier radial zwischen dem Außenbehälter 1 und dem Innenbehälter 2 angeordnet und gleichmäßig über den Umfang verteilt. Die Festlager-Befestigungselemente 5 bilden einen Kegel mit z.B. 45° Kegelwinkel und liegen selbst natürlich in einem Raumwinkel von 45° zur Längsachse L2 des Innenbehälters 2 und zur koaxialen Längsachse L1 des Außenbehälters 1. Die radiale Anordnung weist eine geringere Steifigkeit gegen Verdrehung von Außenbehälter 1 zu Innenbehälter 2 auf als die zuvor beschriebenen Ausführungen von Festlagern.

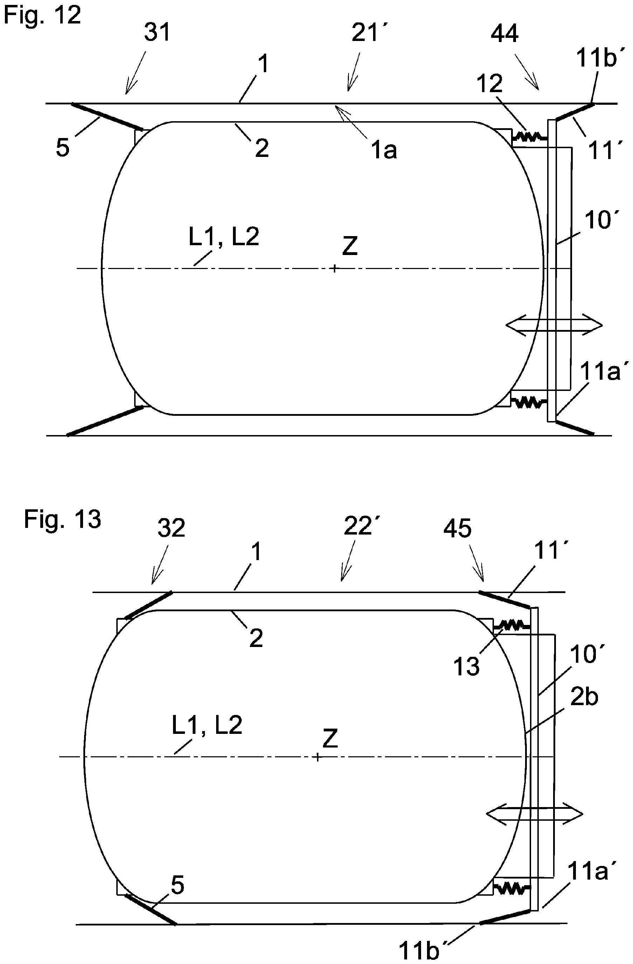

Fig. 12 zeigt eine der Fig. 6 ähnliche Behälteranordnung 21' mit dem Außenbehälter 1 mit einer Längsachse L1 und dem im Außenbehälter 1 thermisch isoliert angeordneten Innenbehälter 2 mit einer Längsachse L2. Die beiden Behälter 1, 2 sind koaxial zueinander angeordnet und durch eine Aufhängevorrichtung miteinander verbunden, die das oben beschriebene Festlager 31 und zusätzlich ein Loslager 44 umfasst. Das Loslager 44 besitzt einen Loslagerring 10' aus einem steifen Material, wie z.B. faserverstärktem Kunststoff oder Metall bzw. einer Metalllegierung. Auf Zug und Druck beanspruchbare Loslager-Befestigungselemente 11' greifen ringförmig verteilt einerseits mit Angriffspunkten 11a' am Loslagerring 10' und andererseits mittels Angriffspunkten 11b' am Außenbehälter 1 an und halten somit den Loslagerring 10' in einer definierten Lage. Der Innenbehälter 2 ist im Loslagerring 10' verschiebbar angeordnet (durch einen Doppelpfeil symbolisiert), wobei in dieser Ausführungsform ein zylindrischer Fortsatz des Innenbehälters 2 im Loslagerring 10' verschiebbar gelagert ist. Der Innenbehälter 2 ist durch am Innenbehälter 2 und am Loslagerring 10' angreifende Zugfedern 12 vorgespannt. Die Loslager-Befestigungselemente 11' sind aus einem möglichst steifen Material gefertigt. Sehr gut eignen sich Faserverbundwerkstoffe, vorzugsweise mit Aramidfasern, Kohlefasern, Glasfasern, Basaltfasern oder Kombinationen daraus, besonders bevorzugt mit Aramidfasern, die abschnittsweise mit Glasfasern gemischt sind. Die Angriffspunkte 11b' der Loslager-Befestigungselemente 11' am Außenbehälter 1 sind vom Zentrum Z des Innenbehälters 2 axial weiter entfernt als die Angriffspunkte 11a' der Loslager-Befestigungselemente 11' am Loslagerring 10'.

Fig. 13 zeigt eine Ausführungsform einer Behälteranordnung 22', die der Ausführungsform von Fig. 12 ähnlich ist, sich aber davon durch eine Bauform des Festlagers 32 wie oben anhand der Fig. 7 beschrieben und eine Variante des Loslagers 45 unterscheidet. Das Loslager 45 besitzt einen Loslagerring 10' aus einem steifen Material, wie z.B. faserverstärktem Kunststoff oder Metall bzw. einer Metalllegierung. Auf Zug und Druck beanspruchbare Loslager-Befestigungselemente 11' greifen ringförmig verteilt einerseits mit Angriffspunkten 11a' am Loslagerring 10' und andererseits mittels Angriffspunkten 11b' am Außenbehälter 1 an und halten somit den Loslagerring 10' in einer definierten Lage. Der Innenbehälter 2 ist mit einem Fortsatz im Loslagerring 10' verschiebbar angeordnet (durch einen Doppelpfeil symbolisiert). Der Innenbehälter 2 ist durch am Innenbehälter 2 und am Loslagerring 10' angreifende Druckfedern 13 vorgespannt. Die Angriffspunkte 11a' der Loslager-Befestigungselemente 11' am Loslagerring 10' sind vom Zentrum Z des Innenbehälters 2 axial weiter entfernt als die Angriffspunkte 11b' der Loslager-Befestigungselemente 11' am Außenbehälter 1.

Faserverbundteile sind in der Regel auf Zug höher belastbar als auf Druck. Die Zugfedern 12 und Druckfedern 13 dienen dazu, diese unterschiedlichen Belastbarkeiten bei Zug und Druck zu berücksichtigen.

## Patentansprüche

1. Bchältcranordnung (20, 21, 21', 22, 22', 23) eines Außenbehälters (1) und eines im Außenbehälter thermisch isoliert angeordneten Innenbehälters (2), wobei zwischen dem Innenbehälter (2) und dem Außenbehälter (1) ein ringförmiger Bauraum (7) definiert ist, wobei ein einzelnes in allen Richtungen im Raum wirkende Kräfte übertragendes Festlager (30, 31, 32, 33, 34, 35, 36), das einerseits am Außenbehälter (1) und andererseits am Innenbehälter (2) angreifende, auf Zug und Druck beanspruchbare, stabförmige Festlager-Befestigungselemente (5) umfasst, wobei die Festlager-Befestigungselemente (5) in dem Bauraum (7) verteilt angeordnet, vorzugsweise im Bereich des Umfangs des Innenbehälters verteilt, am Innenbehälter (2) angreifen, wobei die Festlager-Befestigungselemente (5) in dem ringförmigen Bauraum (7) verteilt, vorzugsweise im Bereich des Umfangs des Außenbehälters (1) verteilt, am Außenbehälter (1) angreifen, wobei die Angriffspunkte (5a) der Festlager-Befestigungselemente (5) am Innenbehälter (2) radial (r1) näher zum Umfang (RI) des Innenbehälters als zur Längsachse (L2) des Innenbehälters (2) liegen und die Angriffspunkte (5b) der Festlager-Befestigungselemente (5) am Außenbehälter (1) radial (r2) näher zum Umfang (RA) des Außenbehälters (1) als zur Längsachse (L1) des Außenbehälters (1) liegen, wobei die Festlager-Befestigungselemente (5) schräg auf die Längsachse (L2) des Innenbehälters (2) stehen und insbesondere nicht parallel zur und nicht normal auf die Längsachse (L2) des Innenbehälters (2) stehen, wobei vorzugsweise die Festlager-Befestigungselemente (5) jeweils paarweise an einer die Innenbehälter-Längsachse (L2) enthaltenden Ebene (x) gespiegelt sind, **dadurch gekennzeichnet dass** die stabförmigen Festlager-Befestigungselemente sowohl im Innenbehälter wie auch am Außenbehälter fest verbunden sind.

2. Behälteranordnung (20, 21, 21', 22, 22', 23) nach Anspruch 1, **dadurch gekennzeichnet, dass** die Festlager-Befestigungselemente (5) die Längsachse (L2) des Innenbehälters (2) nicht schneiden.

3. Behälteranordnung (20, 21, 21', 22, 22', 23) nach Anspruch 1 oder 2, **dadurch gekennzeichnet, dass** die Angriffspunkte (5a) der Festlager-Befestigungselemente (5) am Innenbehälter (2) in einer Normalebene zur Längsachse (L2) des Innenbehälters (2) liegen.

4. Behälteranordnung (20, 21, 21', 22, 22', 23) nach einem der vorhergehenden Ansprüche, **dadurch gekennzeichnet, dass** die Angriffspunkte (5b) der Festlager-Befestigungselemente (5) am Außenbehälter (1) in einer Normalebene zur Längsachse (L1) des Außenbehälters (1) liegen.

## Claims

1. A container arrangement (20, 21, 21', 22, 22', 23) of an outer container (1) and an inner container (2) mounted for thermal insulation in the outer container, wherein an annular installation space (7) is defined between the inner container (2) and the outer container (1), wherein a single fixed bearing (30, 31, 32, 33, 34, 35, 36) transmitting forces acting in space in all directions is provided comprising rod-shaped fixed bearing securing elements (5) which engage, on the one hand, the outer container (1) and, on the other hand, the inner container (2) and which can be stressed in tension and in compression, wherein the fixed bearing securing elements (5) distributed within the installation space (7), preferably in the area of the circumference of the inner container, engage the inner container (2), wherein the fixed bearing securing elements (5) distributed in the annular installation space (7), preferably distributed in the area of the circumference of the outer container (1), engage the outer container (1), wherein the contact points (5a) of the fixed bearing securing elements (5) at the inner container (2) are radially (r1) located closer to the circumference (RI) of the inner container than to the longitudinal axis (L2) of the inner container (2) and the contact points (5b) of the fixed bearing securing elements (5) at the outer container are radially (r2) located closer to the circumference (RA) of the outer container (1) than to the longitudinal axis (L1) of the outer container (1), wherein the fixed bearing securing elements (5) are oblique to the longitudinal axis (L2) of the inner container and in particular neither parallel nor normal to the longitudinal axis (L2) of the inner container (2), wherein preferably the fixed bearing securing elements (5) are mirrored, always in pairs, at a plane (x) including the longitudinal axis (L2) of the inner container, **characterized in that** the rod-shaped fixed bearing securing elements are firmly connected to the inner container as well as the outer container.

2. The container arrangement (20, 21, 21', 22, 22', 23) according to claim 1, **characterized in that** the fixed bearing securing elements (5) do not intersect the longitudinal axis (L2) of the inner container (2).

3. The container arrangement (20, 21, 21', 22, 22', 23) according to claim 1 or 2, **characterized in that** the contact points (5a) of the fixed bearing securing elements (5) at the inner container (2) are located on a normal plane relative to the longitudinal axis (L2) of the inner container (2).

4. The container arrangement (20, 21, 21', 22, 22', 23) according to any one of the preceding claims, **characterized in that** the contact points (5b) of the fixed bearing securing elements (5) at the outer container (1) are located on a normal plane relative to the longitudinal axis (L1) of the outer container (1).

## Revendications

1. Ensemble de réservoirs (20, 21, 21', 22, 22', 23) constitué d'un réservoir extérieur (1) et d'un réservoir intérieur (2) disposé de manière à être isolé thermiquement dans le réservoir extérieur, dans lequel un espace annulaire (7) est défini entre l'espace intérieur (2) et l'espace extérieur (1), dans lequel un palier fixe unique (30, 31, 32, 33, 34, 35, 36) transmettant toutes les forces agissant dans toutes les directions dans l'espace qui comprend des éléments de fixation de palier fixe (5) en forme de barrettes, pouvant être sollicités en traction et en pression, s'appliquant d'une part sur le réservoir extérieur (1) et d'autre part sur le réservoir intérieur (2), dans lequel les éléments de fixation de palier fixe (5), répartis dans l'espace annulaire (7), de préférence répartis dans la région de la périphérie du réservoir extérieur (1), s'appliquent sur réservoir extérieur (1), dans lequel les points d'application (5a) des éléments de fixation de palier fixe (5) sur le réservoir intérieur (2) se trouvent radialement (r1) plus près de la périphérie (R1) du réservoir intérieur que de l'axe longitudinal (L2) du réservoir intérieur (2) et les points d'application (5b) des éléments de fixation de palier fixe (5) sur le réservoir extérieur (1) se trouvent (r2) plus près de la périphérie (RA) du réservoir extérieur (1) que de l'axe longitudinal (L1) du réservoir extérieur (1), dans lequel les éléments de fixation de palier fixe (5) sont en diagonale par rapport à l'axe longitudinal (L2) du réservoir intérieur (2) et en particulier ne sont pas parallèles ni perpendiculaires à l'axe longitudinal (L2) du réservoir intérieur (2), dans lequel de préférence les éléments de fixation de palier fixe (5) sont disposés symétriquement par paires dans un plan (x) contenant l'axe longitudinal (L2) du réservoir intérieur, **caractérisé en ce que** les éléments de fixation de palier fixe en forme de barrettes sont reliés aussi bien au réservoir intérieur qu'au réservoir extérieur.

2. Ensemble de réservoirs (20, 21, 21', 22, 22', 23) selon la revendication 1, **caractérisé en ce que** les éléments de fixation de palier fixe (5) ne coupent pas l'axe longitudinal (L2) du réservoir intérieur (2).

3. Ensemble de réservoirs (20, 21, 21', 22, 22', 23) selon la revendication 1 ou 2, **caractérisé en ce que** les points d'application (5a) des éléments de fixation de palier fixe (5) sur le réservoir intérieur (2) se trouvent dans un plan perpendiculaire à l'axe longitudinal (L2) du réservoir intérieur (2).

4. Ensemble de réservoirs (20, 21, 21', 22, 22', 23) selon une des revendications précédentes, **caractérisé en ce que** les points d'application (5b) des éléments de fixation de palier fixe (5) sur le réservoir extérieur (1) se trouvent dans un plan perpendiculaire à l'axe longitudinal (L1) du réservoir extérieur (1).
